Europäisches Patentamt

European Patent Office

Office européen des brevets

(11) Publication number: **0 417 719 A1**

# EUROPEAN PATENT APPLICATION

(21) Application number: 90117458.1

(22) Date of filing: **11.09.90**

(51) Int. Cl.⁵: **H02H 5/08**, H02H 3/33

(30) Priority: **14.09.89 IT 2171389**

(43) Date of publication of application:
**20.03.91 Bulletin 91/12**

(84) Designated Contracting States:
**AT BE CH DE DK ES FR GB GR IT LI LU NL SE**

(71) Applicant: **ELECTRICAL SAFETY COMPANY S.r.l.**
**Frazione Borasca 18**
**I-20071 Casalpusterlengo (Milano)(IT)**

(72) Inventor: **Ossola, Roberto**
**Via Stelvio, 2**
**IT-20071 Casalpusterlengo Milano(IT)**

(74) Representative: **Faggioni, Giovanmaria, Dr. et al**
**Fumero-Studio Consulenza Brevetti**
**Widenmayerstrasse 4/I**
**W-8000 München 22(DE)**

(54) **Anti-electric shock safety system, for electric machinery and installations.**

(57) The invention concerns an electronic safety device for electrical appliances and installations, meant to provide a protection against current leakages determined by the presence of water or other conductive liquids on parts of the appliance which are not perfectly insulated, and/or current leakages between the phases of the mains. According to the invention said device comprises
- a relay switch positioned on the mains of the electrical appliance and having as many tripping contacts as the phases of the mains,
- a low-voltage electronic circuit to feed the coil of said relay switch, essentially consisting of three parts:
- a first feeding part, normally energized, comprising a transformer connected to said mains and feeding said relay coil through a fuse,
- a second control part, normally de-energized, comprising water or other conductive liquid sensors,
- a third control part, normally de-energized, comprising a sensor for current leakages between the phases of the mains,
said second and third control parts being positioned in parallel with the coil of the relay switch, and their energizing producing the short-circuiting of the coil and the instant tripping of the relay switch.

# Fig.1

# ELECTRONIC SAFETY SYSTEM AGAINST ELECTRIC SHOCKS, FOR ELECTRICAL APPLIANCES AND INSTALLATIONS

The invention concerns an electronic safety system, which can be preset in association with an electrical appliance, or else in correspondence of one or more points of an electric installation. This system is apt to detect any current leakages in the electrical appliance, in the power supply cable, or in the installation downstream of said safety system, whatever may be the cause for the leakage, even if determined by the presence of water or moisture penetrating in contact with the phases of the mains.

There are known to be at present on the market different protection devices against short-circuits or electric discharges, commonly named "life-savers".

Such devices are normally used in the electric installations of houses or offices and they are applied just downstream of the electricity meter, or of a general switch of the installation, so as to be effective for any current leakages over the whole installation.

Said "life-savers" are apt to cause the instant cutoff of a switch positioned on the installation mains, when a short-circuit takes place or even simply a current leakage to earth. In particular, such devices operate at once in the event of a current leakage through the body of a person - due for instance to said person having come into contact with an electrically conductive part of an electrical appliance connected to the installation, either inadvertently or through faulty insulation of said appliance - so as to avoid the risk of said person being hit by an electric shock.

"Life-saving" devices of this type are described for example in DE-A-2015415, FR-A-2177610 and EP-A-0018867. These known devices are generally quite efficient, but they have first of all the drawback of requiring a very good earth connection and, furthermore, they are usually very expensive and quite delicate since, on one hand, they have to be highly resistant to allow the passage of high currents and, on the other hand, they should also be very sensitive so as to be able to detect even very slight current leakages, for instance of the order of 10 mA. For these reasons said "life-saving" devices are applied merely on specific request of the user of the installation, which means that very often they are not applied, leaving the installation dangerously protectionless.

More recently, simpler protection devices have been conceived which, instead of operating on the installation mains, are apt to operate on the single terminal elements of the installation, that is, on the sockets into which are inserted the plugs of the electrical appliances. Such devices, though of more reduced cost if taken singly (nevertheless, the total cost on the installation becomes even higher when wishing to provide a full protection), suffer however from the same drawback of being mounted only on specific request of the user, thus very rarely.

For this reason, the producers of electrical appliances are at present concerned with the problem of providing themselves the protection to users against electric discharges or current leakages in said appliances, independently from any safety systems which may have been applied on the installation. This problem was solved for example in EP-B1-0001831 -owned at present by the Applicant - which proposes a protection device incorporated in the actual appliance being, in the specific case, a hairdrier. Said device is based on the use, on one hand, of a sensor element consisting of a pair of side-by-side wire nets apt to detect any water or moisture penetrating into the appliance and, on the other hand, of an electronic control and release circuit, operated in response to the signal sent from said sensor element and apt to cause the tripping of a relay switch positioned on the mains of the appliance.

Another known device of this type is described in WO-A-8905050 -being substantially similar to EP-B1-0001831 - and in EP-A-0141352, which provides instead for a safety system incorporated in a connection device. Nevertheless, both said devices have the already mentioned drawback of requiring a reliable earth connection for the correct working thereof.

The object of the present invention is to realize an electronic system of this last type, apt to form an integrating part of the known electrical appliances, so as to improve the performances thereof as far as safety of the user.

This result is obtained essentially due to the fact that said device comprises
- a relay switch positioned on the mains of the electrical appliance and having as many tripping contacts as the phases of the mains,
- a low-voltage electronic circuit to feed the coil of said relay switch, essentially consisting of three parts:
- a first feeding part, normally energized, comprising a transformer connected to said mains and feeding said relay coil through a fuse,
- a second control part, normally de-energized, comprising water or other conductive liquid sensors,
- a third control part, normally de-energized, comprising a sensor for current leakages between the phases of the mains,
said second and third control parts being positioned in parallel with the coil of the relay switch, and their energizing producing the short-circuiting of the coil and the instant tripping of the relay switch.

As can be easily understood, a first fundamental advantage of the device according to the invention is represented by the fact that it works perfectly even if an earth connection is missing, or in the event of a faulty earth connection. This characteristic is present only in the already cited EP-A-0001831 and in GB-A-2021337, which have besides an essentially different circuit configuration.

Furthermore, the whole safety system is low-tension fed by means of a transformer T1 which, with its double insulation, is apt to insulate the mains voltage from the electronic circuit and from the sensors inside the appliance to be controlled. On the other hand, when said appliance is not working, only the low voltage of the electronic circuit is present therein and not the mains voltage, which is another important advantage from the point of view of safety.

A still further substantial advantage lies in the fact that the safety system is self-controlled, in the sense that it cuts off the mains voltage not only in the presence of current leakages or overloads, but also when any one of the circuit components gets damaged or is anyhow de-energized. A particularly interesting feature actually consists in the fact of providing for a circuit component - namely, said fuse in series with the coil of the relay switch - which, in case of tripping of the safety circuit, forcedly requires repairing either simultaneously with or subsequently to removal of the fault.

In other words, the safety circuit according to the invention provides - in a relatively simple and economic structure - a variety of functions and advantages which cannot be obtained even by summing up the teachings of prior art.

Further characteristics and advantages of the electronic safety system according to the invention will anyhow be more evident from the following detailed description of some preferred embodiments thereof, given by way of example and illustrated on the accompanying drawings, in which:

Fig. 1 shows an electronic feeding and safety circuit according to the invention;
Fig. 2 shows a different embodiment of the same safety circuit; and
Fig. 3 shows a still further embodiment of said safety circuit.

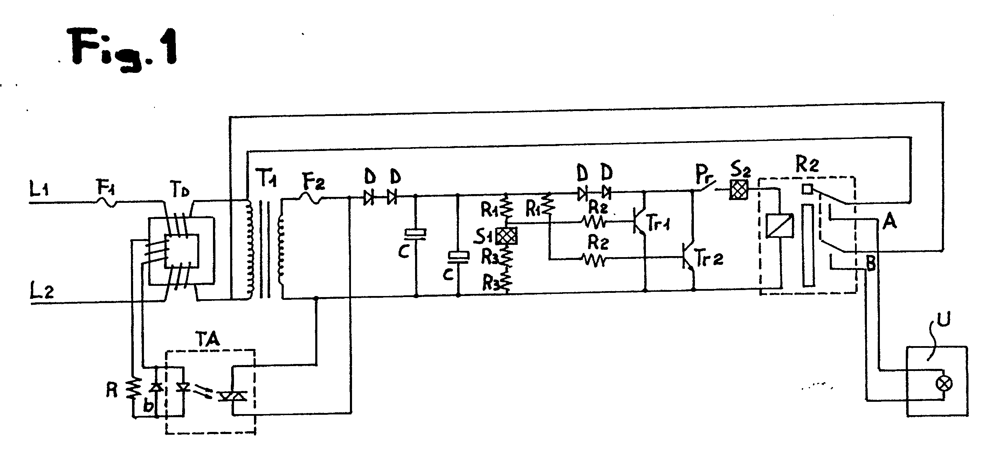

As shown in figure 1, the circuit comprises the two phases L1 and L2 of the mains, on one of which is possibly inserted a fuse F1 for protection against any tension overloads on the line.

Said line L1, L2, feeds an electrical appliance U through a main switch RL having two contacts A and B apt to cut off both phases of the mains.

The switch RL is a relay switch, the coil of which is fed by a low-voltage electronic circuit, essentially formed of three parts:
- a first part comprises a transformer T1, which supplies current to the whole circuit through the safety switch PR, normally on. The transformer T1 is in turn connected to the mains L1, L2, at a point upstream of the relay switch RL. This circuit part normally keeps the coil of the relay switch RL energized and the contacts A, B, on, so that the appliance U is normally fed;
- a second part mainly comprises two transistors Tr1, Tr2, and at least a water or moisture sensor S1, S2. When water, or other conductive liquid, forms a bridge between S1 and S2, whereby a minimum current passage is produced between S1 and S2, the circuit turns conductive Tr1 and Tr2, which - being mounted in a circuit in parallel with the coil of the relay switch RL - generate a current sufficient to short-circuit said coil, so that the switch RL trips and cuts off the contacts A, B, of the circuit feeding the appliance U. The same short-circuit, due to the presence of the capacitors C, subsequently sends through the fuse F2 a current which is sufficient to burn it out;
- a third part, interlaced with the first, is based on a system detecting the current leakages between the phases of the mains. In the embodiment of figure 1, this third part of the circuit consists of a hybrid transformer TD and of a TRIAC picking up system TA. Also this third part of the circuit is positioned in parallel with the coil of the relay switch RL. When the hybrid transformer TD detects current leakages on the mains L1, L2, it operates the TRIAC TA through the diodes D1, D2. The current then circulating in the low-voltage circuit, through points A1, A2, is sufficient to turn conductive Tr1 and Tr2, and thus - as seen above - to short-circuit the coil of the relay switch RL, which cuts off contacts A, B, stopping the circulation of current in the circuit of the appliance U, and then burning out the fuse F2.

From the above it can thus be seen that the device according to the invention operates both in the presence of water or other conductive liquid - by energizing the second part of the circuit - and in the presence of current leakages between the phases of the mains - by energizing the third part of the circuit - and that these operations are quite independent, though finally acting on the same relay switch RL and fuse F2. The tripping of the circuit moreover takes place in two stages: first of all by instant cutting off of the relay switch RL and, straight after, by burning out of the fuse F2.

It is also understood that the aforedescribed device according to the invention operates also independently from a more or less efficient earthing of the installation, which forms a considerable advantage in the practical application of said device.

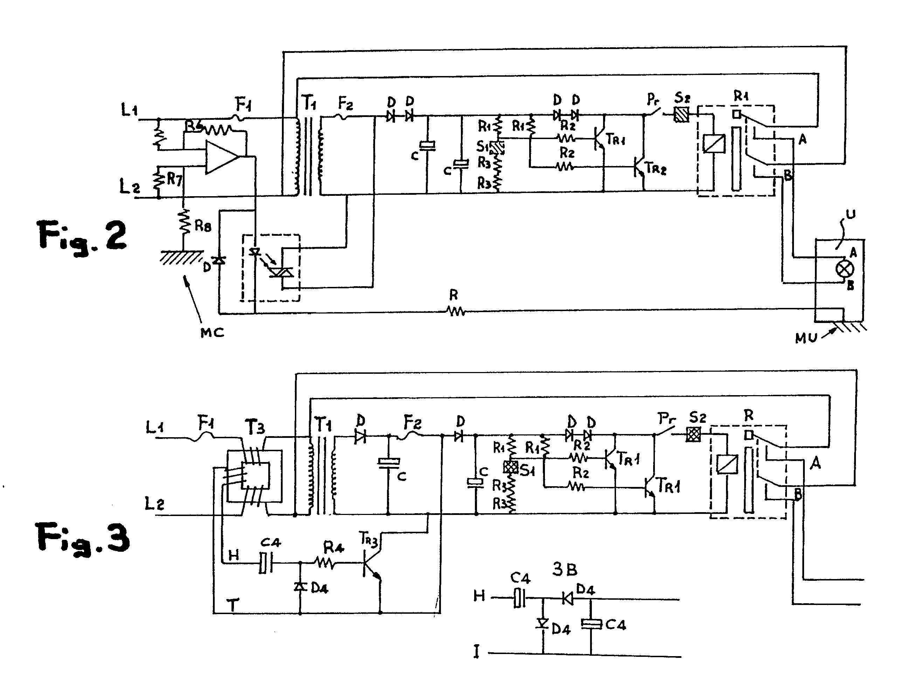

In the embodiment of figure 2, the TRIAC TA - or else an SCR -instead of being operated by a hybrid transformer, is controlled by a current leakage amplifying system, which is series connected to a resistor R between the earth MU of the appliance U and the general earthing MG of the installation.

In the embodiment of figure 3, the current leakages detected by the hybrid transformer TD are amplified by a system of the type comprising a capacitor and germanium diode C4-D4, positioned on the line cf the sub-circuit HI of the hybrid transformer. This amplifying circuit - which can be a multistage one, as shown in figure 3B - acts on a transistor Tr3, instead of acting on the TRIAC or SCR, and is connected to the main electronic circuit at a point preferably between the capacitors C, so that the system may operate as already seen with reference to figure 1.

The advantages of the safety system according to the invention are the following:

a) It is an active safety system, in that any component which may be short-circuited or de-energized causes the de-energizing of the whole system through tripping of the relay switch RL and burnout of the fuse F2, or else it leaves the system in perfect working conditions;

b) The safety system is automatically energized on plugging in, or after any accidental cutoff of the current feed, without requiring a manual resetting;

c) After tripping of the relay switch RL, the subsequent burnout of the fuse F2 demands for its replacement, and consequently also for a search to repair the fault, before the circuit can be energized again;

d) The system can be energized with a switch Pr which operates on low voltage and the tripping of which totally removes the mains voltage from the whole installation.

## Claims

1) Electronic safety device for electrical appliances and installations, characterized in that it comprises
- a relay switch positioned on the mains of the electrical appliance and having as many tripping contacts as the phases of the mains,
- a low-voltage electronic circuit to feed the coil of said relay switch, essentially consisting of three parts:
- a first feeding part, normally energized, comprising a transformer connected to said mains and feeding said relay coil through a fuse,

- a second control part, normally de-energized, comprising water or other conductive liquid sensors,
- a third control part, normally de-energized, comprising a sensor for current leakages between the phases of the mains,
said second and third control parts being positioned in parallel with the coil of the relay switch, and their energizing producing the short-circuiting of the coil and the instant tripping of the relay switch.

2) Safety device as in claim 1), wherein said fuse interposed on the first feeding part of the electronic circuit is calibrated so that the current short-circuiting said coil causes its delayed burnout.

3) Safety device as in claim 1), wherein said transformer of the first part of the electronic circuit is connected to the mains at a point upstream of said relay switch.

4) Safety device as in claim 1), wherein said second part of the electronic circuit comprises a pair of transistors in parallel with the coil of the relay switch, which are normally cutoff and become conductive when a detection current passes through said water or moisture sensors.

5) Safety device as in claim 1), wherein said third part of the electronic circuit comprises a TRIAC or SCR, operated by a unit detecting current leakages and fed in parallel with the coil of the relay switch.

6) Safety device as in claim 5), wherein said current leakage detecting unit operating the TRIAC consists of a hybrid transformer positioned on the phases of the mains.

7) Safety device as in claim 1), wherein said third part of the electronic circuit comprises a transistor operated by a hybrid transformer on the phases of the mains.

8) Safety device as in claim 6) or 7), wherein the TRIAC or SCR, or said transistor, are operated through an amplifying circuit comprising a capacitor and germanium diode, possibly a multistage amplifying circuit.

9) Safety device as in claim 1), wherein said current leakage detecting unit operating the TRIAC consists of an amplifying circuit and of a resistor, series connected between the earth of the electrical appliance and the general earthing of the installation.

Fig.1

EP 0 417 719 A1

**Fig. 2**

**Fig.3**

3 B

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,Y | EP-A-0 141 352 (ROBERT KRUPS STIFTUNG & CO) <br> * page 15, line 32 - page 17, line 6 * <br> — — — | 1-9 | H 02 H 5/08 <br> H 02 H 3/33 |
| D,Y | WO-A-8 905 050 (H.BREMER) <br> * page 7, lines 4 - 25 * <br> — — — | 1,3,4 | |
| D,Y | GB-A-2 021 337 (LAPROM CORPORATION) <br> * abstract * <br> — — — | 2,5-7 | |
| D,Y | FR-A-2 177 610 (HEINEMANN) <br> * page 2, line 26 - page 3, line 35 * <br> — — — | 8 | |
| D,Y | EP-A-0 018 867 (OSMOND M.) <br> * page 2, lines 7 - 15 * <br> — — — | 9 | |
| D,A | DE-A-2 015 415 (AMCOR) <br> * page 9, paragraph 2 * <br> — — — | 1,5,6 | |
| D,A | EP-A-0 001 831 (RAVIDA) <br> * abstract * <br> — — — — — | 1 | |

|  | TECHNICAL FIELDS SEARCHED (Int. Cl.5) |
|---|---|
|  | H 02 H |

The present search report has been drawn up for all claims

| Place of search | Date of completion of search | Examiner |
|---|---|---|
| The Hague | 27 November 90 | LIBBERECHT L.A. |

CATEGORY OF CITED DOCUMENTS

X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons

& : member of the same patent family, corresponding
document